(19) Europäisches Patentamt
European Patent Office
Office européen des brevets

(11) **EP 0 919 408 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.$^7$: **B60G 17/015**

(21) Anmeldenummer: **98120916.6**

(22) Anmeldetag: **04.11.1998**

(54) **Aktives Fahrwerk in einem Kraftfahrzeug**

Active wheel support system for a motor vehicle

Châssis actif de véhicules automobiles

(84) Benannte Vertragsstaaten:
**DE FR GB IT**

(30) Priorität: **01.12.1997 DE 19753205**

(43) Veröffentlichungstag der Anmeldung:
**02.06.1999 Patentblatt 1999/22**

(73) Patentinhaber: **DaimlerChrysler AG**
**70567 Stuttgart (DE)**

(72) Erfinder:
• **Rutz, Rüdiger**
**73257 Köngen (DE)**
• **Winkler, Martin**
**71409 Schwaikheim (DE)**

(56) Entgegenhaltungen:
**DE-A1- 3 821 609      DE-A1- 4 117 897**
**DE-A1- 4 323 544      DE-A1- 4 414 022**
**GB-A- 2 252 277**

**Beschreibung**

Die Erfindung betrifft ein aktives Fahrwerk in einem Kraftfahrzeug nach dem Oberbegriff des Anspruches 1.

Aus der DE 44 14 022 A1 ist ein Fahrwerk bekannt, das mit einem aktiven Aufhängungssystem zwischen den Rädern und dem Fahrzeugaufbau ausgestattet ist. Das Aufhängungssystem besteht aus einem jeweils einem Rad zugeordneten passiven Federelement und einem aktiven, regelbaren Stützaggregat, an dem sich das Federelement abstützt und dessen Hubstellung mit Hilfe eines hydraulischen Verdrängeraggregates einstellbar ist.

Zur Regelung der Stützaggregate werden zunächst über Weggeber die Hubstellungen der Stützaggregate erfaßt und aus den Hubstellungen in einer Regelelektronik gemäß einem linearen Zusammenhang die zwischen den Rädern und dem Aufbau wirkenden, tatsächlichen Stützkräfte ermittelt. Die Stützkräfte werden in der Regelektronik mit vorgegebenen Soll-Stützkräften verglichen, die sich aus Soll-Hubstellungen berechnen. Die Regelabweichung führt dann zu einem Regelsignal zur Einstellung der Stützaggregate.

Mit dieser Vorrichtung bzw. diesem Verfahren ist es zwar möglich, auf einfache Weise direkt über Wegmessungen eine Einstellung der gewünschten Stützkräfte zu erhalten. Die DE 44 14 022 A1 offenbart aber darüberhinaus keine weiteren Einsatzmöglichkeiten.

Ein Regelungskonzept, mit dem Hub-, Nick- und Wankbewegungen eines Fahrwerks gedämpft werden, ist aus der DE 41 17 897 A1 (Oberbegriff von Anspruch 1) bekannt. Dieses Konzept, das auch die Einstellung der Wankmomentverteilung zwischen Vorder- und Hinterachse als zusätzlichem Freiheitsgrad des Systems "Fahrwerk" ermöglicht, beruht auf einer Variante der Skyhookdämpfung, derzufolge eine Steuerkraft ermittelt wird, die von der Aufbaugeschwindigkeit abhängt. Um die Regelung durchführen zu können, müssen zunächst vertikale Aufbaugeschwindigkeiten an ausgesuchten Stellen des Fahrwerks ermittelt werden, aus denen die Hub-, Wank- und Nickgeschwindigkeit berechnet werden. Diese werden in sogenannte Quasimodalgeschwindigkeiten umgeformt, aus denen sich wiederum Sollkräfte für aktiv einstellbare Hydraulikzylinder ergeben.

Das aus der DE 41 17 897 A1 bekannte Regelungskonzept ist zwar in der Lage, eine Mehrzahl von Systemfreiheitsgraden zu beeinflussen, es werden jedoch hierfür aufgrund der Komplexität der Regelung mehrere Regelungsmatrizen mit einer Vielzahl an Koeffizienten benötigt, wobei die Ermittlung optimaler Koeffizientenwerte nur mit großem Aufwand möglich ist. Weiterhin ist nachteilig, daß über Sensoren die Aufbaugeschwindigkeiten ermittelt werden müssen, deren Messung aufwendiger durchzuführen ist als einfache Lageänderungen.

Der Erfindung liegt das Problem zugrunde, eine einfach umzusetzende Regelung der Wankmomentverteilung zwischen Vorder- und Hinterachse eines Fahrzeugs anzugeben.

Diese Problem wird erfindungsgemäß bei einem Fahrwerk mit den Merkmalen des Anspruches 1 gelöst.

Das gesamte, auf das Fahrzeug wirkende Wankmoment, welches beispielsweise bei Kurvenfahrten entsteht, kann zwischen Vorderachse und Hinterachse gemäß einer vorgebbaren prozentualen Aufteilung verteilt werden. Die Wankmomentverteilung wird in Form einer Verspannung als zusätzlicher System-Freiheitsgrad bei statisch überbestimmten Fahrzeugen mit vier Rädern gezielt dazu eingesetzt, das Fahrverhalten positiv zu beeinflussen.

Erfindungsgemäß reicht es aus, eine gewünschte Wankmomentverteilung in einem Eingabeglied vorzugeben und mit der tatsächlichen Wankmomentverteilung abzugleichen, wobei die tatsächliche Wankmomentverteilung ausschließlich auf die die Aufhängungssysteme kennzeichnenden Zustandsgrößen zurückzuführen ist. Diese Zustandsgrößen können in bevorzugter Ausführung Lagegrößen des Federbeins, insbesondere der Hub des Stützaggregats oder der Gesamthub von Federelement und Stützaggregat sein; aus dem Hub kann auf die Stützkraft im Federbein und aus der Stützkraft auf die an jeder Achse wirkenden Wankmomente geschlossen werden.

Es fließen also lediglich die mit einfachen Weggebern zu messende Lagegrößen in die Berechnung der tatsächlichen Wankmomentverteilung ein, nicht jedoch schwieriger zu ermittelnde Geschwindigkeits- oder Beschleunigungsgrößen. Sofern sich das Fahrzeug im wesentlichen nur auf einer ebenen Fahrbahn bewegt, ist es sogar ausreichend, nur den Hub der Stützaggregate aufzunehmen; auf den Hub der Federelemente kann dagegen verzichtet werden, da aufgrund der gleichen Federsteifigkeiten und des gleichen Federhubs der beiden Federbeine an der linken und an der rechten Seite einer Achse die auf den Hub der Federelemente zurückzuführenden Federkräfte sich gegenseitig aufheben.

Gemäß einer anderen zweckmäßigen Ausführung wird als Zustandsgröße zunächst der Druck in den Stützaggregaten ermittelt und vom Druck auf die Aktuatorkraft in den Stützaggregaten geschlossen, die wiederum Grundlage für die Wankmomentberechnung ist.

Die Regeleinheit besteht aus unterschiedlichen Regelgliedern, in denen die Meßsignale weiterverarbeitet, zweckentsprechend umgeformt, mit den im Eingabeglied erzeugten Sollsignalen verglichen und schließlich ein Regelsignal erzeugt wird, das vorzugsweise einem Stellglied zur Einstellung der Stützaggregate zugeführt wird.

Im einzelnen sind als Regelglieder bevorzugt mehrere Verarbeitungsglieder, die Addierer, Subtrahierer, Multiplizierer und Dividierer umfassen, vorgesehen. Zunächst werden in einem ersten Verarbeitungsglied aus den erfaßten Zustandsgrößen die Wankmomente gemäß einer vorgegebenen Gesetzmäßigkeit ermittelt. In einem nachgeschalteten zweiten Verarbeitungsglied, bestehend aus einem Addierer und einem Dividierer, wird die tatsächliche Wankmomentverteilung aus den an den jeweiligen Achsen angreifenden Wankmomenten berechnet. In einem nachfolgenden Subtrahierer wird die Regelabweichung zu einer vorgegebenen Wankmomentverteilung gebildet, anschließend in einem dritten Verarbeitungsglied die Regelabweichung durch Beaufschlagung mit dem Gesamt-Wankmoment in eine Regelabweichung für das gewünschte Soll-Wankmoment an der Vorderachse umgeformt und schließlich mit einem Verstärkungsfaktor multipliziert, um ein geeignet dimensioniertes Regelsignal zu erhalten.

In einer anderen vorteilhaften Ausführung wird die vorgegebene Wankmomentverteilung zunächst in einem Sollwert-Manipulator mit dem Gesamt-Wankmoment multipliziert, wobei das dabei erzeugte Signal das für die Vorderachse vorzugebende Soll-Wankmoment repräsentiert. Von diesem wird in einem nachgeschalteten Subtrahierer das tatsächliche an der Vorderachse anfallende Ist-Wankmoment abgezogen und die Differenz als Regelabweichung wiederum mit einem Verstärkungsfaktor multipliziert. Diese Methode hat den Vorteil, daß keine Divisionen durchgeführt werden müssen und dementsprechend auch nicht die Gefahr einer Division mit Null besteht.

Weitere Vorteile und zweckmäßige Ausführungsformen sind den weiteren Ansprüchen, der Figurenbeschreibung und den Zeichnungen zu entnehmen. Es zeigen:

Fig. 1    ein Federbein mit passivem Federelement und aktivem Stützaggregat,
Fig. 2    ein Blockschaltbild zur Regelung der Wankmomentverteilung in einer ersten Ausführung,
Fig. 3    ein Blockschaltbild zur Regelung der Wankmomentverteilung in einer zweiten Ausführung.

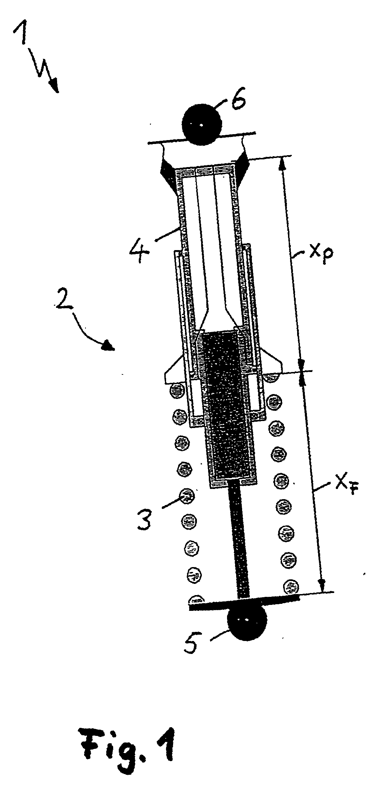

Das in Fig. 1 dargestellte Aufhängungssystem 1 ist Teil eines aktiven Fahrwerks und besteht aus insgesamt vier Federbeinen 2, die zwischen jeweils einem Rad 5 des Fahrzeugs und dem Fahrzeugaufbau 6 angeordnet sind. Jedes Federbein 2 umfaßt ein passives Federelement 3 und ein dazu in Reihe geschaltetes, aktives Stützaggregat 4, welches zweckmäßig als Plunger ausgebildet ist. Das Federelement 3 weist die Federkonstante c auf, entsprechend berechnet sich die Stützkraft F im Federbein nach der Beziehung

$$F = c * (x_P - x_S),$$

wobei $x_P$ den Hub des Stützaggregats bzw. Plungerhub und $x_S$ den Federhub bezeichnet.

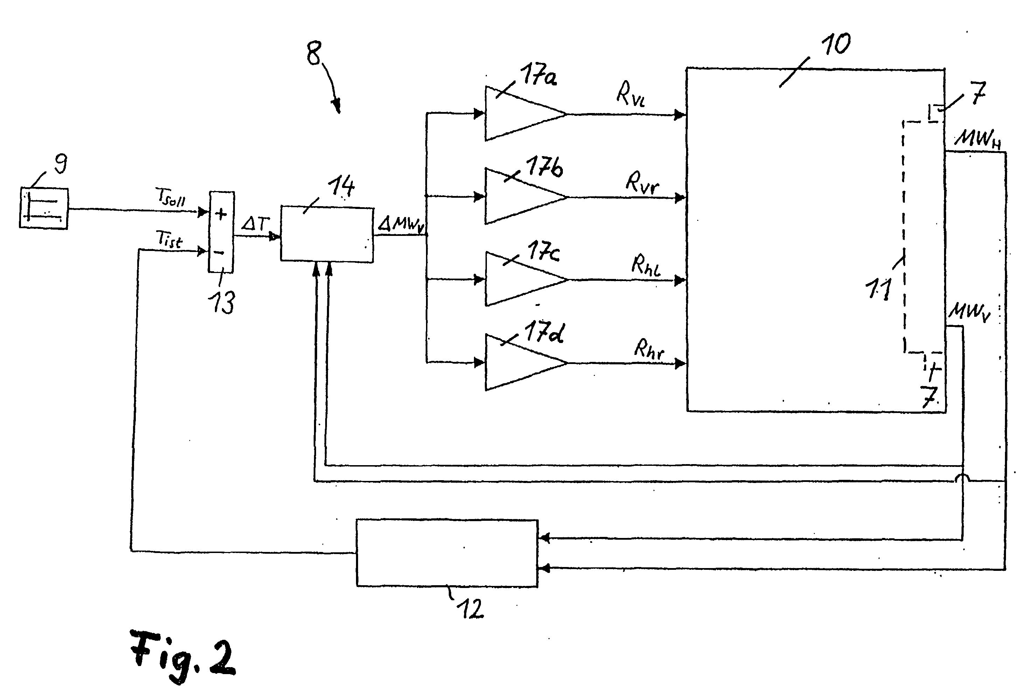

Gemäß Fig. 2 ist ein Regelungskonzept vorgesehen, um eine gewünschte Verteilung der um die Längsachse des Fahrzeugs drehenden Wankmomente an der Vorderachse und an der Hinterachse zu erhalten.

Das Fahrzeug mit aktiver Regelung ist als Regelstrecke im Block 10 repräsentiert. In Sensoren 7, die bevorzugt als Weggeber ausgebildet sind, werden der Hub $x_P$ des Stützaggregats und der Hub $x_S$ der Feder aufgenommen und einem ersten Verarbeitungsglied 11 zugeführt, in dem die Stützkraft F im Federbein gemäß der oben genannten Beziehung berechnet wird.

In einer besonders vorteilhaften Ausführung messen die Sensoren 7 nur den Hub des Stützaggregats. Diese Ausführung liefert qualitativ gleichwertige Regelergebnisse wie die Messung des Hubs von Stützaggregat und Federweg, sofern sich das Fahrzeug auf einer ebenen Fahrbahn befindet.

Aus den Stützkräften werden die an jeder Achse wirksamen Wankmomente berechnet. Beispielsweise lautet das Wankmoment $MW_V$ für die Vorderachse

$$MW_V = (F_{vl} - F_{vr}) * Spur_{vorn} ,$$

wobei $F_{vl}$ und $F_{vr}$ die Stützkräfte in den Federbeinen vorne links und vorne rechts und $Spur_{vorn}$ die Spurweite an der Vorderachse ist.

In analoger Weise wird das Wankmoment $MW_H$ für die Hinterachse errechnet.

Die Wankmomente $MW_V$ und $MW_H$ werden in Signalform einem dem ersten Verarbeitungsglied 11 nachgeschalteten zweiten Verarbeitungsglied 12 zugeführt, das eine Kombination aus Addierer und Dividierer darstellt. Das Verarbeitungsglied 12 produziert als Ausgangssignal die tatsächliche Wankmomentverteilung $T_{ist}$, indem die eingehenden Wankmomente $MW_V$ und $MW_H$ zunächst im Addierer addiert und anschließend im Dividierer das an der Vorderachse wirkende Wankmoment $MW_V$ durch die Summe der beiden Wankmomente dividiert wird gemäß der Beziehung

$$T_{ist} = MW_V / (MW_V + MW_H)$$

Aus dieser Beziehung geht hervor, daß Tist Werte zwischen 0 und 1 annehmen kann, wobei der Wert 0 bedeutet, daß das gesamte auf das Fahrzeug wirkende Wankmoment an der Hinterachse anliegt und der Wert 1 bedeutet, daß das gesamte Wankmoment an der Vorderachse anliegt.

Das berechnete, tatsächliche Wankmomentverhältnis $T_{ist}$ wird einem Subtrahierer 13 zugeführt und dort von der vorzugebenden Wankmomentverteilung $T_{soll}$ subtrahiert, die in einem Eingabeglied 9 auf einen gewünschten Wert zwischen 0 und 1 eingestellt werden kann. Die Subtraktion liefert die Regelabweichung $\Delta T$ gemäß der Beziehung

$$\Delta T = T_{soll} - T_{ist} ,$$

die in Signalform einem dritten Verarbeitungsglied 14 zugeführt wird.

Das dritte Verarbeitungsglied 14 liefert als Ausgangssignal die Wankmomentabweichung $\Delta MW_V$ von gewünschtem und tatsächlichem Wankmoment an der Vorderachse durch Multiplikation der Regelabweichung $\Delta T$ mit der Summe der Wankmomente $MW_V$, $MW_H$ gemäß der Beziehung

$$\Delta MW_V = \Delta T * (MW_V + MW_H).$$

Die Wankmomentabweichung wird nun als Signal den nachgeschalteten Verstärkern 17a bis 17d zugeführt und mit einem Verstärkungsfaktor $+/-K_T$ multipliziert, so daß man das Regelsignal R gemäß der Beziehung

$$R = +/-K_T * \Delta MW_V$$

erhält. Die Anzahl der Verstärker entspricht der Anzahl der Federbeine. Die Vorzeichen der Verstärkungsfaktoren $K_T$ sind so gewählt, daß die Regelsignale $R_{vl}$ vorne links und $R_{hr}$ hinten rechts positiv sind, die Regelsignale $R_{vr}$ vorne rechts und $R_{hl}$ hinten links dagegen negativ sind.

Die Regelsignale R haben die physikalische Dimension einer Steuerspannung und werden jeweils einem Stellglied eines Federbeins zugeführt, um durch Steuerung von Servoventilen die in die Stützaggregate fließenden Ölströme zu steuern.

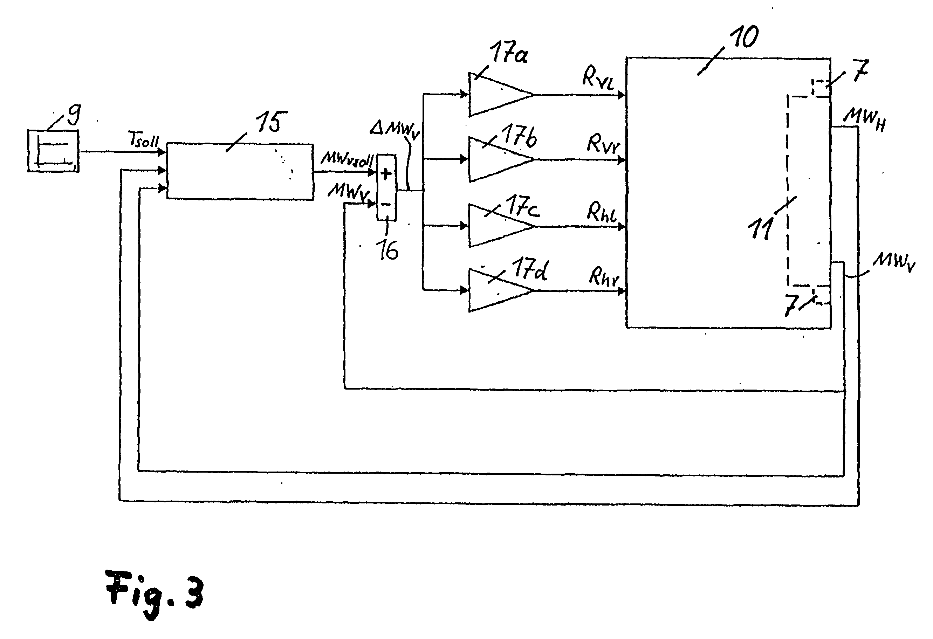

In Fig. 3 ist ein weiteres Ausführungsbeispiel gezeigt. In dem im Blockschaltbild repräsentierten, realen Fahrwerk werden über die Signalgeber 7 Zustandsgrößen gemessen, aus denen im ersten Verarbeitungsglied 11 die Wankmomente $MW_V$ und $MW_H$ an Vorder- und Hinterachse ermittelt werden. Die Wankmomente werden einem als Addierer und Multiplizierer ausgeführten Sollwert-Manipulator 15 zugeführt, wo die Summe der Wankmomente mit der im Eingabeglied 9 vorgegebenen Wankmomentverteilung $T_{soll}$ multipliziert wird, wodurch man als Ausgangswert einen Sollwert $MW_{Vsoll}$ für das für die Vorderachse vorzugebende Wankmoment gemäß der Beziehung

$$MW_{Vsoll} = T_{soll} * (MW_V + MW_H)$$

erhält. Von dem Sollwert $MW_{Vsoll}$ wird in einem nachgeschalteten Subtrahierer 16 das tatsächliche Vorderachsen-Wankmoment $MW_V$ abgezogen, das dem Subtrahierer 16 unmittelbar vom ersten Verarbeitungsglied 11 zugeführt wird. Als Resultat erhält man als Ausgangssignal die Differenz $\Delta MW_V$ zwischen gewünschtem und tatsächlichem Vorderachsen-Wankmoment, die als Regelabweichung den Verstärkern 17a, b, c, d zugeführt und in diesen in gleicher Weise wie beim ersten Ausführungsbeispiel mit positiv bzw. negativ beaufschlagten Verstärkungsfaktoren $K_T$ multipliziert wird. Die daraus hervorgehenden Regelsignale $R_{vl}$, $R_{vr}$, $R_{hl}$, $R_{hr}$ werden wiederum als Steuerspannung den Stützaggregaten der Federbeine zugeführt.

In beiden Ausführungsbeispielen erhält man durch Zusammenfassung der einzelnen Glieder das Regelgesetz

$$R = +/-K_T * [MW_V * (1 - T_{soll}) - MW_H * T_{soll}] .$$

**Patentansprüche**

1.    Regelbares Aufhängungssystem in einem aktiven Fahrwerk eines Kraftfahrzeugs, mit Federbeinen (2), die aus passiven Federelementen (3) zwischen jeweils einem Rad (5) des Fahrzeugs und dem Fahrzeugaufbau (6) sowie den Federelementen (3) zugeordneten, einstellbaren Stützaggregaten (4) bestehen, wobei Signalgeber (7) zur Erfassung von Zustandsgrößen des Aufhängungssystems vorgesehen sind und aus den Zustandsgrößen die tatsächliche Wankmomentverteilung ($T_{ist}$) zwischen der Vorderachse und der Hinterachse des Fahrzeugs und die tatsächlichen Wankmomente ($MW_H$; $MW_V$) ermittel werden, mit einem Eingabeglied (9), in dem als Sollsignal die gewünschte Wankmomentverteilung ($T_{soll}$) zwischen der Vorderachse und der Hinterachse des Fahrzeugs vorgebbar ist, und mit einer Regeleinheit (8) zur Erzeugung eines das Aufhängungssystem beaufschlagenden Regelsignals in Abhängigkeit der gewünschten Wankmomentverteilung ($T_{soll}$),
**dadurch gekennzeichnet,**
**daß** das Regelsignal ($R_{vl}$, $R_{hr}$) für das Federbein (2) vorne links und hinten rechts gemäß dem Regelgesetz

$$R_{vl} = R_{hr} = + K_T * [MW_v * (1 - T_{soll}) - MWH * T_{soll}]$$

und das Regelsignal ($R_{vr}$, $R_{hl}$) für das Federbein (2) vorne rechts und hinten links gemäß dem Regelgesetz

$$R_{vr} = R_{hl} = - K_T * [MW_V * (1 - T_{soll}) - MW_H * T_{soll}]$$

gebildet wird, wobei

$K_T$ ... einen Verstärkungsfaktor,
$MW_V$ ... das ermittelte tatsächliche Wankmoment an der Vorderachse,
$MW_H$ ... das ermittelte tatsächliche Wankmoment an der Hinterachse,
$T_{soll}$ ... die gewünschte Wankmomentverteilung

bezeichnet.

2.  Aufhängungssystem nach Anspruch 1,
    **dadurch gekennzeichnet,**
    **daß** die von den Signalgebern (7) erfaßte Zustandsgröße der Hub ($x_P$) jeweils eines Stützaggregats (4) ist.

3.  Aufhängungssystem nach Anspruch 1,
    **dadurch gekennzeichnet,**
    **daß** die von den Signalgebern (7) erfaßte Zustandsgröße der Hub ($x_F$) jeweils eines Federelements (3) und der Hub ($x_P$) des jeweils zugeordneten Stützaggregats (4) ist.

4.  Aufhängungssystem nach Anspruch 1,
    **dadurch gekennzeichnet,**
    **daß** die von den Signalgebern (7) erfaßte Zustandsgröße der Druck im Stützaggregat (4) ist.

5.  Aufhängungssystem nach einem der Ansprüche 1 bis 4,
    **dadurch gekennzeichnet,**
    **daß** ein erstes Verarbeitungsglied (11) vorgesehen ist, in dem die Wankmomente ($MW_v$, $MW_H$) an der Vorderachse und an der Hinterachse aus den erfaßten Zustandsgrößen berechnet werden.

6.  Aufhängungssystem nach Anspruch 5,
    **dadurch gekennzeichnet,**
    **daß** die Wankmomente ($MW_v$, $MW_H$) aus den an der jeweiligen Achse angreifenden Federbeinkräften und die Federbeinkräfte aus den erfaßten Zustandsgrößen ermittelt werden.

7.  Aufhängungssystem nach einem der Ansprüche 1 bis 6,
    **dadurch gekennzeichnet,**
    **daß** ein dem ersten Verarbeitungsglied (11) nachgeschaltetes zweites Verarbeitungsglied (12), bestehend aus einem Addierer und einem Dividierer, vorgesehen ist, dem die an der Vorderachse und an der Hinterachse angreifenden Wankmomente ($MW_v$, $MM_H$) zuführbar sind, wobei im zweiten Verarbeitungsglied (12) die tatsächliche Wankmomentverteilung ($T_{ist}$) als Division des an der Vorderachse angreifenden Wankmoments ($MW_v$) durch die Summe beider Wankmomente ($MW_v$, $MW_H$) erzeugt wird.

8.  Aufhängungssystem nach Anspruch 7,
    **dadurch gekennzeichnet,**
    **daß** ein Subtrahierer (13) vorgesehen ist, in dem die Regelabweichung ($\Delta T$) aus vorgegebener und tatsächlicher

Wankmomentverteilung ($T_{soll}$, $T_{ist}$) gebildet wird.

9. Aufhängungssystem nach Anspruch 8,
**dadurch gekennzeichnet,**
**daß** dem Subtrahierer (13) ein drittes Verarbeitungsglied (14) nachgeschaltet ist, das einen Addierer und einen Multiplizierer umfaßt, wobei in dem dritten Verarbeitungsglied (14) die Regelabweichung ($\Delta T$) aus vorgegebener und tatsächlicher Wankmomentverteilung ($T_{soll}$, $T_{ist}$) mit der Summe der an der Vorderachse und an der Hinterachse angreifenden Wankmomente ($MW_V$, $MW_H$) multipliziert wird.

10. Aufhängungssystem nach einem der Ansprüche 1 bis 6,
**dadurch gekennzeichnet,**
**daß** dem Eingabeglied (9) ein Sollwert-Manipulator (15) nachgeschaltet ist, der einen Addierer und einen Multiplizierer umfaßt, wobei dem Sollwert-Manipulator (15) das im Eingabeglied (9) erzeugte Sollsignal ($T_{soll}$) und die Wankmomente ($MW_V$, $MW_H$) zugeführt sind und ein modifiziertes Sollsignal ($MW_{vsoll}$) aus der Multiplikation des Sollsignals ($T_{soll}$) mit der Summe der Wankmomente ($MW_V$, $MW_H$) erzeugt wird.

11. Aufhängungssystem nach Anspruch 10,
**dadurch gekennzeichnet,**
**daß** dem Sollwert-Manipulator (15) ein Subtrahierer (16) nachgeschaltet ist, in dem als Regelabweichung die Wankmomentabweichung ($\Delta MW_V$) zwischen erwünschtem Vorderachsen-Wankmoment ($MW_{vsoll}$) und tatsächlichem Vorderachsen-Wankmoment ($MW_V$) gebildet wird.

12. Aufhängungssystem nach einem der Ansprüche 1 bis 11,
**dadurch gekennzeichnet,**
**daß** die Regelabweichung ($\Delta T$, $\Delta MW_V$) einem Verstärker (17a, b, c, d) zugeführt wird.

13. Aufhängungssystem nach Anspruch 12,
**dadurch gekennzeichnet,**
**daß** das Ausgangssignal des Verstärkers (17a, b, c, d) als Regelsignal einem Stellglied eines Stützaggregats (4) zugeführt wird.

14. Aufhängungssystem nach einem der Ansprüche 1 bis 13,
**dadurch gekennzeichnet,**
**daß** die Stützaggregate (4) Plunger sind, die mit jeweils einem Federelement (3) in Reihe geschaltet sind.

**Claims**

1. Adjustable suspension system in an active chassis of a motor vehicle, with compression struts (2) consisting of passive spring elements (3) between in each case a wheel (5) of the vehicle and the vehicle body (6) and adjustable support aggregates (4) associated with the spring elements (3), such that signal emitters (7) are provided to determine condition parameters of the suspension system and from the said condition parameters the actual rolling moment distribution ($T_{ist}$) between the front and rear axles of the vehicle and the actual rolling moments ($MW_H$; $MW_V$) are determined, with an input element (9) by means of which the desired rolling moment distribution ($T_{soll}$) between the front and rear axles of the vehicle can be specified as a nominal-value signal, and with a control unit (8) to produce a regulating signal that acts upon the suspension system as a function of the desired rolling moment distribution ($T_{soll}$),
**characterised in that**
the regulating signal ($R_{vl}$, $R_{hr}$) for the compression struts (2) at the front on the left and at the rear on the right is generated in accordance with the control relationship:

$$R_{vl}=R_{hr}=+K_T*[MW_V*(1-T_{soll})-MW_H*T_{soll}]$$

and the regulating signal ($R_{vr}$, $R_{hl}$) for the compression struts (2) at the front on the right and at the rear on the left is generated in accordance with the control relationship:

$$R_{vr}=R_{hr}=-K_T*[MW_V*(1-T_{soll})-MW_H*T_{soll}]$$

in which:

$K_T$      is an amplification factor
$MW_V$      is the determined actual rolling moment of the front axle
$MW_H$      is the determined actual rolling moment of the rear axle
$T_{soll}$      is the desired rolling moment distribution.

2.   Suspension system according to Claim 1,
   **characterised in that**
   the condition parameter determined by the signal emitters (7) is in each case the stroke ($x_p$) of a support aggregate (4).

3.   Suspension system according to Claim 1,
   **characterised in that**
   the condition parameter determined by the signal emitters (7) is in each case the stroke ($x_F$) of a spring element (3) and the stroke ($x_p$) of the support aggregate (4) associated therewith.

4.   Suspension system according to Claim 1,
   **characterised in that**
   the condition parameter determined by the signal emitters (7) is the pressure in the support aggregate (4).

5.   Suspension system according to any of Claims 1 to 4,
   **characterised in that**
   a first processor (11) is provided, in which the rolling moments ($MW_V$, $MW_H$) respectively of the front and rear axles are computed from the condition parameters determined.

6.   Suspension system according to Claim 5,
   **characterised in that**
   the rolling moments ($MW_V$, $MW_H$) are determined from the spring forces acting at the respective axis and the said spring forces are determined from the condition parameters measured.

7.   Suspension system according to any of Claims 1 to 6,
   **characterised in that**
   a second processor (12) connected after the first processor (11) and consisting of an adder unit and a divider unit is provided, to which the rolling moments ($MW_V$, $MW_H$) acting at the front and rear axles can be fed, such that in the said second processor (12), the actual rolling moment distribution ($T_{ist}$) is obtained by dividing the rolling moment ($MW_V$) acting on the front axle by the sum of both rolling moments ($MW_V$, $MW_H$).

8.   Suspension system according to Claim 7,
   **characterised in that**
   a subtractor unit (13) is provided, in which the control deviation ($\Delta T$) between the specified and the actual rolling moment distribution ($T_{soll}$, $T_{ist}$) is computed.

9.   Suspension system according to Claim 8,
   **characterised in that**
   a third processor (14) is connected after the subtractor unit (13), which comprises an adder unit and a multiplier unit such that, in the said third processor (14), the control deviation ($\Delta T$) between the specified and actual rolling moment distributions ($T_{soll}$, $T_{ist}$) is multiplied by the sum of the rolling moments ($MW_V$, $MW_H$) acting at the front and rear axles.

10.   Suspension system according to any of Claims 1 to 6,
    **characterised in that**
    after the input element (9) is connected a nominal value manipulator (15) comprising an adder unit and a multiplier unit, such that the nominal signal ($T_{soll}$) produced in the input element (9) and the rolling moments ($MW_V$, $MW_H$) are fed to the nominal value manipulator (15) and a modified nominal signal ($MW_{V\ soll}$) is produced by multiplying

the nominal signal ($T_{soll}$) by the sum of the rolling moments ($MW_V$, $MW_H$).

**11.** Suspension system according to Claim 10,
**characterised in that**
a subtractor unit (16) is connected after the nominal value manipulator (15), in which, as a control deviation, the rolling moment deviation ($\Delta MW_v$) between the desired front axle rolling moment ($MW_{V\,soll}$) and the actual front axle rolling moment ($MW_V$) is computed.

**12.** Suspension system according to any of Claims 1 to 11,
**characterised in that**
the control deviation ($\Delta T$, $\Delta MW_V$) is fed to an amplifier (17a, b, c, d).

**13.** Suspension system according to Claim 12,
**characterised in that**
the output signal from the amplifier (17a, b, c, d) is fed as a control signal to an adjustor element of a support aggregate (4).

**14.** Suspension system according to any of Claims 1 to 13,
**characterised in that**
the support aggregates (4) are plungers, in each case connected in series with a spring element (3).


**Revendications**

**1.** Système de suspension régulable dans un train de roulement actif d'un véhicule automobile, comportant des jambages de suspension (2) constitués par des éléments ressorts passifs (3) entre une roue respective (5) du véhicule et la superstructure de véhicule (6) ainsi que par des dispositifs d'appui (4) réglables associés aux éléments ressorts (3), dans lequel sont prévus des émetteurs de signaux (7) pour détecter des grandeurs d'état du système de suspension, et la répartition du moment de roulis réelle ($T_{réelle}$) entre l'essieu avant et l'essieu arrière du véhicule et les moments de roulis réels ($MW_H$ ; $MW_V$) sont détectés à partir des grandeurs d'état, comportant un organe d'entrée (9) dans lequel la répartition de moment de roulis désirée ($T_{consigne}$) entre l'essieu avant et l'essieu arrière du véhicule peut être imposée à titre de signal de consigne, et comportant une unité de régulation (8) pour émettre un signal de régulation, sollicitant le système de suspension, en fonction de la répartition de moment de roulis désirée ($T_{consigne}$),
**caractérisé en ce que** le signal de régulation ($R_{vl}$, $R_{hr}$) pour les jambages de suspension (2) avant gauche et arrière droit est formé suivant la règle

$$R_{vl} = R_{hr} = + K_T * [MW_V * (1 - T_{consigne}) - MW_H * T_{consigne}]$$

et le signal de régulation ($R_{vr}$, $R_{hl}$) pour les jambages de suspension (2) avant droit et arrière gauche est formé suivant la règle

$$R_{vr} = R_{hl} = - K_T * [MW_V * (1 - T_{consigne}) - MW_H * T_{consigne}]$$

avec les désignations suivantes :

$K_T$ ... un facteur d'amplification
$MW_V$ ...le moment de roulis détecté réellement au niveau de l'essieu avant
$MW_H$ ... le moment de roulis détecté réellement au niveau de l'essieu arrière
$T_{consigne}$ ... la répartition de moment de roulis désirée.

**2.** Système de suspension selon la revendication 1, **caractérisé en ce que** la grandeur d'état détectée par les émetteurs de signaux (7) est la course ($x_P$) d'un dispositif d'appui respectif (4).

**3.** Système de suspension selon la revendication 1, **caractérisé en ce que** la grandeur d'état détectée par les émetteurs de signaux (7) est la course ($x_F$) d'un élément ressort respectif (3) et la course ($x_P$) du dispositif d'appui respectif (4) associé.

4. Système de suspension selon la revendication 1, **caractérisé en ce que** la grandeur d'état détectée par les émetteurs de signaux (7) est la pression dans le dispositif d'appui (4).

5. Système de suspension selon l'une quelconque des revendications 1 à 4, **caractérisé en ce qu'**il est prévu un premier organe de traitement (11) dans lequel sont calculés les moments de roulis ($MW_V$, $MW_H$) au niveau de l'essieu avant et de l'essieu arrière à partir des grandeurs d'état détectées.

6. Système de suspension selon la revendication 5, **caractérisé en ce que** les moments de roulis ($MW_V$, $MW_H$) sont déterminés à partir des forces de jambage de suspension attaquant l'essieu respectif, et les forces de jambage de suspension sont déterminées à partir des grandeurs d'état détectées.

7. Système de suspension selon l'une quelconque des revendications 1 à 6, **caractérisé en ce qu'**il est prévu un second organe de traitement (12) agencé en aval du premier organe de traitement (11) et constitué par un additionneur et par un diviseur, auquel peuvent être amenés les moments de roulis ($MW_V$, $MW_H$) attaquant l'essieu avant et l'essieu arrière, la répartition de moment de roulis réelle ($T_{réelle}$) étant générée dans le second organe de traitement (12) à titre de division du moment de roulis ($MW_V$) attaquant l'essieu avant par la somme des deux moments de roulis ($MW_V$, $MW_H$).

8. Système de suspension selon la revendication 7, **caractérisé en ce qu'**il est prévu un soustracteur (13) dans lequel est formé l'écart de régulation ($\Delta T$) à partir des répartitions de moment de roulis imposée et réelle ($T_{consigne}$, $T_{réelle}$).

9. Système de suspension selon la revendication 8, **caractérisé en ce qu'**un troisième organe de traitement (14) est agencé en aval du soustracteur (13), organe de traitement (14) qui comprend un additionneur et un multiplicateur et dans lequel l'écart de régulation ($\Delta T$) formé à partir des répartitions de moment de roulis imposée et réelle ($T_{consigne}$, $T_{réelle}$) est multiplié avec la somme des moments de roulis ($MW_V$, $MW_H$) attaquant l'essieu avant et l'essieu arrière.

10. Système de suspension selon l'une quelconque des revendications 1 à 6, **caractérisé en ce qu'**un manipulateur de valeur de consigne (15) est agencé en aval de l'organe d'entrée (9), qui comprend un additionneur et un multiplicateur, le signal de consigne ($T_{consigne}$) généré dans l'organe d'entrée (9) et les moments de roulis ($MW_v$, $MW_H$) sont amenés au manipulateur de valeur de consigne (15), et un signal de consigne modifié ($MW_{consigne}$) est généré à partir de la multiplication du signal de consigne ($T_{consigne}$) avec la somme des moments de roulis ($MW_V$, $MW_H$).

11. Système de suspension selon la revendication 10, **caractérisé en ce qu'**un soustracteur (16) est agencé en aval du manipulateur de valeur de consigne (15), dans lequel est formé, à titre d'écart de régulation, l'écart de moment de roulis ($\Delta MW_V$) entre le moment de roulis désiré de l'essieu avant ($MW_{Vconsigne}$) et le moment de roulis réel de l'essieu avant ($MW_V$).

12. Système de suspension selon l'une quelconque des revendications 1 à 11, **caractérisé en ce que** l'écart de régulation ($\Delta T$, $\Delta MW_V$) est amené à un amplificateur (17a, b, c, d).

13. Système de suspension selon la revendication 12, **caractérisé en ce que** le signal de sortie de l'amplificateur (17a, b, c, d) est amené à titre de signal de régulation à un organe de positionnement d'un dispositif d'appui (4).

14. Système de suspension selon l'une quelconque des revendications 1 à 13, **caractérisé en ce que** les dispositifs d'appui (4) sont des plongeurs qui sont montés en série avec un élément respectif des éléments ressorts (3).

**Fig. 1**

Fig. 2

EP 0 919 408 B1

Fig. 3

EP 0 919 408 B1